# EUROPEAN PATENT SPECIFICATION

(11) **EP 2 452 598 B1**
(45) Date of publication and mention of the grant of the patent: **06.09.2017**
(21) Application number: 10796735.8
(22) Date of filing: 09.07.2010
(51) Int. Cl.: A47J 37/06

(54) **BAKING DEVICE CAPABLE OF AUTOMATICALLY COMPENSATING TEMPERATURE**
BACKVORRICHTUNG MIT MÖGLICHKEIT ZUM AUTOMATISCHEN TEMPERATURAUSGLEICH
DISPOSITIF DE CUISSON À COMPENSATION AUTOMATIQUE DE TEMPÉRATURE

(30) Priority: 10.07.2009 CN 200920306005 U
(43) Date of publication of application: 16.05.2012
(73) Proprietor: Tsann Kuen (Zhangzhou) Enterprise Co., Ltd., Fujian 363000 (CN)
(72) Inventor: ZHAN, Yixin, Zhangzhou Fujian 363000 (CN)
(74) Representative: Verscht, Thomas Kurt Albert
(86) International application number: PCT/CN2010/075074
(87) International publication number: WO 2011/003358

(56) References cited:
- CN-A- 1 882 274
- CN-U- 201 469 052
- CN-Y- 2 820 025
- DE-A1- 3 021 557
- JP-A- H10 286 183
- JP-A- 2001 221 445
- US-A1- 2007 017 384

## Description

### Filed of the invention

The present invention relates to a temperature auto-compensation grill.

### Background of the invention

The existence grill includes an upper grilling unit, a lower grilling unit and a heating circuit, the upper grilling unit rotating joints to the lower grilling unit and can rotate between a first position and a second position. The grill is in the first status when the upper grilling unit is situated in the first position; the grill is in the second status when the upper grilling unit is situated in the second position. The heating circuit includes a heater and a thermostat; one end of the heater connects to one electrode of the power, the other end connecting to one end of the thermostat, and the other end of the thermostat connects to the other electrode of the power. The invariable temperature of the thermostat can not be adjusted, so that the grill temperature in the first status is equal to that in the second status. But with the difference of the working status in the first and the second status, for example, the first status is the grill closed status and the second status is the grill opening status, the temperature will be obvious difference in the grill.

With respect to the prior art attention is drawn to US 2007/017384 A1 from which a toaster grill is known which has a lower housing that supports a lower cooking surface and an upper housing that supports an upper cooking surface. The upper housing pivots with respect to a "U" shaped frame that is hinged with respect to the lower cooking surface. A locking hinge allows the pivoting motion of the frame to be automatically arrested in an intermediate orientation between the fully closed and fully open grill orientations. The locking hinge automatically resets when the upper housing is rotated from the fully open grill orientation to the fully closed orientation.

Further, from DE 30 21 557 A1 an electric baking device for waffles or the like is known. This electric baking device comprises two baking plates which can be connected to a supply voltage via a temperature-controlled switch. The baking plates have two optionally settable power levels.

JP H10 286183 A relates to the problem to provide a heating cooker by which temp. in a mainbody case is prevented from excessively increasing and efficient heating cooking without interruption is executed when heated and cooked food is taken-out from the mainbody case and uncooked food before cooking is newly contained in the mainbody case so as to repeatedly and continuously execute heating and cooking. To this end an oven toaster is provided with the mainbody case containing uncooked food so as to be taking-out possible, heaters internally provided in the mainbody case and a power supply circuit supplying power. Then, the power supply circuit is provided with a low-temp. thermostat (a first disconnecting means) for stopping power supply to the heaters when temp. inside the mainbody case becomes previously set first temp., a high-temp. thermostat (the second disconnecting means) for stopping power supply to the heaters when temp. becomes the previously set second one being higher than the first one and relay switch (a change-over means) for selectively changing-over the low-temp. thermostat and the high-temp. thermostat.

### Summary of the invention

The present invention is provided with a temperature auto-compensation grill, which overcomes the disadvantage of the existing grill of bigger difference temperature of the grill.

The first technical proposal of the present invention to resolve the problem of the existing technology is:
A temperature auto-compensation grill includes an upper grilling unit, a lower grilling unit and a heating circuit; the upper grilling unit rotating connects to the lower grilling unit and rotates between a first position and a second position. The grill is in the first status when the upper grilling unit is situated in the first position; the grill is in the second status when the upper grilling unit is situated in the second position. The heating circuit includes:
   A heater, one end of which attaches to one electrode of the power;
   A first thermostat, one end of which attaches to the other end of the heater;
   A second thermostat, one end of which attaches to the other end of the heater; and
   A change-over switch, which connects to the other electrode of the power and the first thermostat in the first status, the change-over switch connects to the other electrode of the power and the second thermostat.

In another preferred embodiment, the present invention further includes an operating mechanism to touch the change-over switch; the operating mechanism links to the upper grilling unit of the grill to form a linkage connection.

In another preferred embodiment, the change-over switch is a push electric switch, which has a push switch; the operating mechanism includes a rotation pan which rotates synchronously with the upper grilling unit and a pendulum which is fixed in the rotation pan, the pendulum can touch the push switch.

In another preferred embodiment, the steady temperature of the first thermostat is lower than that of the second thermostat.

In another preferred embodiment, the heating circuit and the switch are disposed under the lower grilling unit.

The second technical proposal of the present invention to resolve the problem of the existing technology is:
A temperature auto-compensation grill includes an upper grilling unit, a lower grilling unit and a heating circuit, the upper grilling unit rotating connects to the lower grilling unit and rotates between a first position and a second position;
The grill is in the first status when the upper grilling unit is situated in the first position; the grill is in the second status when the upper grilling unit is situated in the second position. The heating circuit includes:
   A heater, one end of which attaches to one electrode of the power;

A thermostat for the steady temperature regulation connecting to the other end of the heater and the other electrode of the power, the thermostat includes a chane-ove switch to set the first steady temperature in the first status and the second steady temperature in the second status.

In another preferred embodiment, the grill includes an operation mechanism linking to the change-over switch, the operation mechanism links to the upper grilling unit to form a linkage connection.

In another preferred embodiment, the operation mechanism includes a linkage sliding connecting to the upper grilling unit, the first end of the linkage touch the change-over switch; the upper grilling unit is disposed with withstand portion which can withstand the second end of the linkage to push the linkage sliding when the upper grilling unit rotates from the first position to the second position.

In another preferred embodiment, the first steady temperature is lower than the second steady temperature.

Compared to the existing technical proposal, the present invention of a temperature auto-compensation grill can choose different thermostats or choose different temperature of the thermostat when in the first status or in the second status. The present invention regulars the temperature control system automatically and achieve the effect of temperature auto-compensation. So the pan temperature of the grill keeps steady, reducing the pan temperature difference due to the different heat emission condition in different working status. The operation mechanism linkage connects to the upper grilling unit, so when the upper grilling unit is situated in the second position, that is the grill in the second status, the grill will operates the change-over switch or change-over mechanism automatically. When the upper grilling unit returns to the first position, that is the grill in the first status, the grill will return the change-over switch or the change-over mechanism. So the chosen of the thermostat and the change of the change-over switch is intellectualized chosen.

The rotation pan drives the pendulum to swing and the pendulum pushes the change-over switch to realize the thermostat automatically chosen. The present invention is simple structure and cheap, having high change-over accuracy. The withstand portion withstands the linkage to push the linkage sliding, and the sliding linkage drives the change-over switch rotating, making the thermostat changing over with the steady temperature changing. The present invention is simple structure and cheap, having high change-over accuracy.

### Brief description of the drawings

The present invention will be further described with the drawings and the embodiments.
Fig.1 illustrates the circuit of the grill in the first embodiment;
Fig.2 illustrates the stereoscopic diagram of the grill in closing status in the first embodiment;
Fig.3 illustrates the stereoscopic diagram of the grill in opening
Fig.4 illustrates the A enlargement schematic
Fig.5 illustrates the enlargement of the B part in the fig.3;
Fig.6 illustrates the circuit of the grill in the other preferred embodiment;
Fig.7 illustrates the structure of the grill in close status in the second preferred embodiment;
Fig.8 illustrates the structure of the grill in opening in 180 degree in the second preferred embodiment;
Fig.9 illustrates the enlargement of the C part in the fig.7;
Fig. 10 illustrates the enlargement of the D part in the fig.8.

### Detailed description of the embodiments

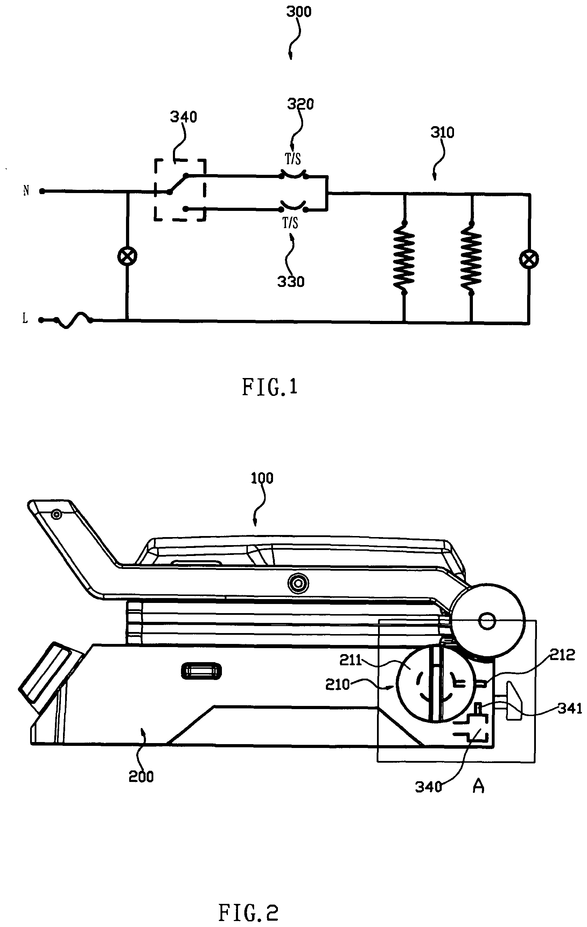

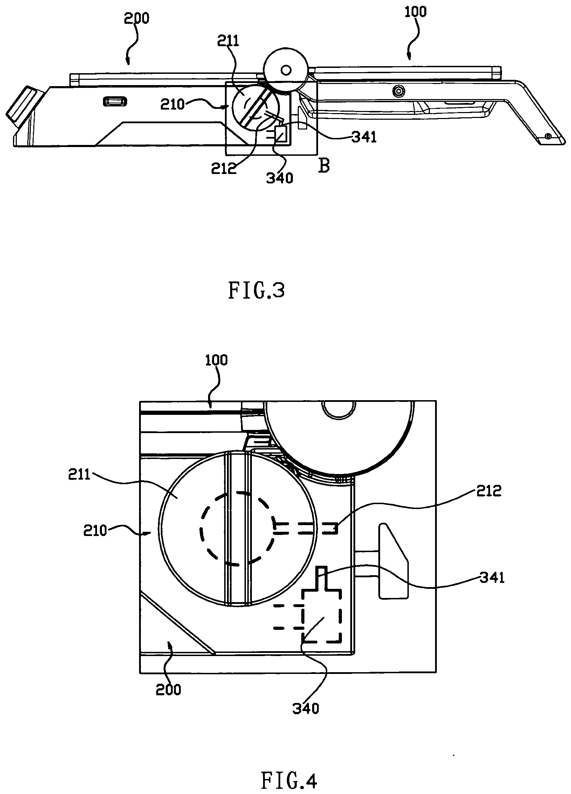

The first preferred embodiment:
Refer to the fig.2 and the fig.3, a temperature auto-compensation grill includes an upper grilling unit 100, a lower grilling unit 200 and a heating circuit 300.
The upper grilling unit 100 rotating connects to the lower grilling unit 200 and rotates between a first position and a second position. The grill is in the closing status when the upper grilling unit 100 is in the first position, and the grill is in the open status when the upper grilling unit is in the second position.

Refer to the fig.2, fig.3, fig.4 and fig.5, the upper grilling unit 200 is disposed with an operation mechanism 210, which includes a rotation pan 211 to synchronously rotate with the upper grilling unit 100 and an operation pendulum 212 fixed to the rotation pan 211 and extended out of the rotation pan 211. In this embodiment, the synchronously rotating between the upper grilling unit 100 and the rotation pan 211 means that the rotation of the upper grilling unit 100 drives the rotation pan 211 to rotate. The detailed structure can be like this: the upper grilling unit 100 includes a rotating sleeve rotating on the axis, the rotating sleeve and the rotating pan gear with another. So the rotating sleeve is the driving gear and the rotation pan is the driven gear.

Refer to the fig.1, fig.4 and the fig.5, the heating circuit 300 includes:
A heater 310, one end of which attaches to one electrode of the power; A first thermostat 320, one end of which attaches to the other end of the heater;
A second thermostat 330, one end of which attaches to the other end of the heater; and
A change-over switch 340, which connects to the other electrode of the power and the first thermostat in the first status, the change-over switch connects to the other electrode of the power and the second thermostat in the second status.

In this embedment, the change-over switch 340 is a push electrical switch, including a push switch 341.

The grill changes from the closing status to the opening in 180°C status, the upper grilling unit rotates to drive the rotation pan rotating and the pendulum swing. The pendulum will push the push switch 341 to cut off the first thermostat and connect the second thermostat when the pendulum swings to a certain position. The grill changes from the opening in 180°C status to the closing status, the pendulum and the push switch 341 return to the normal position to cut off the second thermostat and connect the first thermostat.

In this preferred embodiment, as requirement, the heating circuit 300 can further include a power light and a heater light parallel connecting to the heater; the steady temperature of the first thermostat is lower than the steady temperature of the second thermostat.

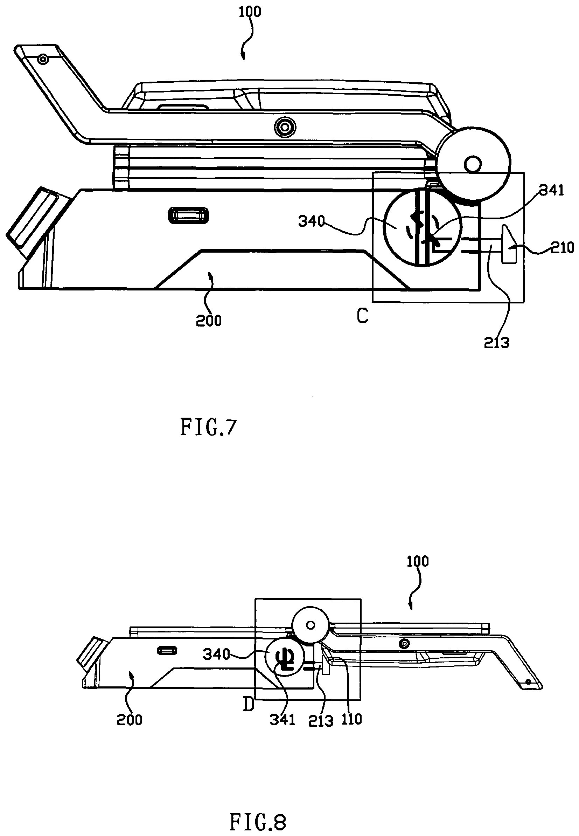

The second preferred embodiment:
Refer to the fig.7 and the fig.8, a temperature auto-compensation grill includes an upper grilling unit 100, a lower grilling unit 200 and a heating circuit 300, the upper grilling unit 100 rotates connects to the lower grilling unit 200 and rotates between a first position and a second position. The grill is in the closing status when the upper grilling unit 100 is in the first position, and the grill is in the open in 180°C status when the upper grilling unit is in the second position.

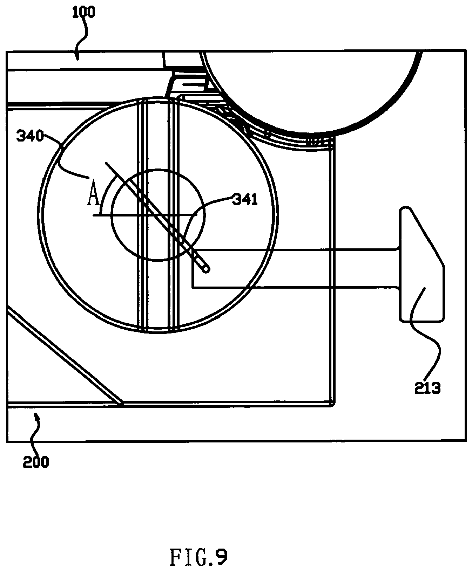

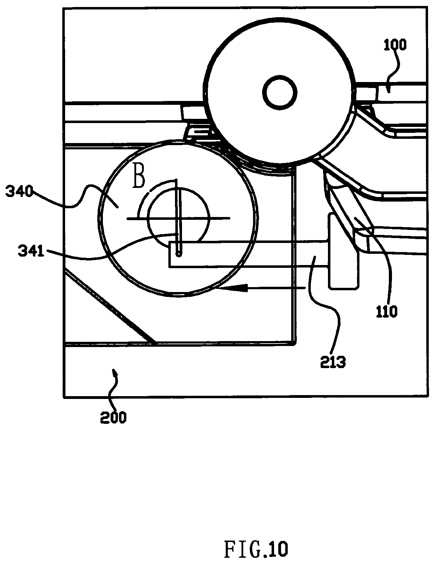

Refer to the fig. 1, fig.8, fig.9 and fig. 10, the lower grilling unit 200 is disposed with an operation mechanism 210 inside. The operation mechanism 210 includes a linkage 213 sliding connecting to the upper grilling unit 200. The first end of the linkage 213 is disposed inside the lower grilling unit 200, while the second end extends out of the rear side of the lower grilling unit 200. The rear side of the upper grilling unit 100 is disposed with a withstand portion 100, which can withstand the second end of the linkage to push the linkage sliding when the upper grilling unit rotates from the first position to the second position. That is the operation mechanism linkage connects to the upper grilling unit of the grill.

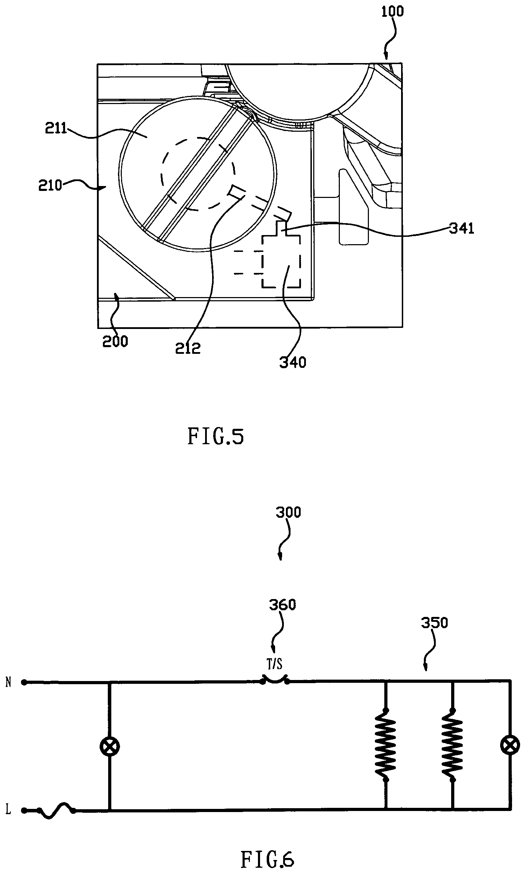

Refer to the fig.6, fig.9 and fig. 10, the heating circuit 300 includes:
A heater 450, one end of which attaches to one electrode of the power;
A thermostat 460 to regulate the steady temperature connecting to the other end of the heater and the other electrode of the power, the thermostat 460 includes a change-over switch 460 to set the steady temperature of the thermostat, the thermostat has the first steady temperature in the first status, and the second steady temperature in the second status. The first end of the linkage withstand the change-over switch.

Refer to the fig.6, fig.9 and the fig. 10, the heating circuit 300 includes a heater 450, one end of each connects to the one electrode of the power, a thermostat 460 to regular the temperature, one end of which connects to the other end of the heater and the other end connecting to the other electrode of the power. The thermostat 460 to regular the temperature has a change-over switch 461 to the first steady temperature when in the first status and the second temperature when in the second statue

The grill transforms from the closing status to the open in 180°C status. The upper grilling unit rotates, when the withstand portion withstands the second end of the linkage, and continues rotating until the withstand portion drives the linkage sliding and the change-over mechanism rotating to change from the angle B to the angle A. That is the change from the first steady temperature to the second steady temperature. The grill transforms from the open in 180°C status to the closing status. The upper grilling unit rotates, when the withstand portion and the change-over mechanism return to its normal position, the change-over mechanism changes from the angle A to the angle B. That is the change from the second steady temperature to the first steady temperature.

In this preferred embodiment, as requirement, the heating circuit 300 is further disposed with a power light and a heater light parallel connecting to the heater; the first steady temperature is lower than the second steady temperature.

Although the present invention has been described with reference to the preferred embodiments thereof for carrying out the invention, it is apparent to those skilled in the art that a variety of modifications and changes may be made without departing from the scope of the present invention which is intended to be defined by the appended claims.

### Industrial applicability

The present invention provides with a temperature auto-compensation grill which can choose different thermostat when in the first status and in the second status. The present invention can regular the temperature control system automatically, achieving temperature auto-compensation. The present invention has good usage effect and well industrial applicability.

## Claims

1. A temperature auto-compensation grill includes an upper grilling unit (100), a lower grilling unit (200) and a heating circuit (300); the upper grilling unit (100) rotating connects to the lower grilling unit (200) and rotates between a first position and a second position; the grill is in the first status when the upper grilling unit (100) is situated in the first position; the grill is in the second status when the upper grilling unit (100) is situated in the second position; wherein the heating circuit (300) includes:
A heater (310), one end of which attaches to one electrode of the power;
A first thermostat (320), one end of which attaches to the other end of the heater (310); **characterized by**
A second thermostat (330), one end of which attaches to the other end of the heater (310); and
A change-over switch (340), which connects to the other electrode of the power and the first thermostat (320) in the first status, the change-over switch (340) connects to the other electrode of the power and the second thermostat (330) in the second status.

2. A temperature auto-compensation grill according to the claim 1, wherein the temperature auto-compensation grill further includes an operating mechanism (210) to touch the change-over switch (340); the operating mechanism linkage connects to the upper grilling unit of the grill.

3. A temperature auto-compensation grill according to the claim 2, wherein the change-over switch (340) is a push electric switch, which includes a push switch; the operating mechanism (210) includes a rotation pan (211) rotating synchronously with the upper grilling unit (100) and an operation pendulum fixed to the rotation pan (211) to touch the push switch.

4. A temperature auto-compensation grill according to the claim 1, wherein the steady temperature of the first thermostat (320) is lower than the steady temperature of the second thermostat (330).

5. A temperature auto-compensation grill according to the claim 1, claim 2 or claim 3, wherein the heating circuit (300) and the switch are disposed inside the lower grilling unit (200).

6. A temperature auto-compensation grill includes an upper grilling unit (100), a lower grilling unit (200) and a heating circuit (300), the upper grilling unit (100) rotating connects to the lower grilling unit (200) and rotates between a first position and a second position; the grill is in the first status when the upper grilling unit (100) is situated in the first position; the grill is in the second status when the upper grilling unit (100) is situated in the second position; wherein the heating circuit (300) includes:
A heater (450), one end of which attaches to one electrode of the power;
A thermostat (460) to regulate the steady temperature connecting to the other end of the heater (450) and the other electrode of the power, **characterized in that** the thermostat (460) includes a change-over switch to set the steady temperature of the thermostat (460), the thermostat (460) has the first steady temperature in the first status, and the thermostat (460) has the second steady temperature in the second status.

7. A temperature auto-compensation grill according to the claim 6, wherein the temperature auto-compensation grill further includes an operating mechanism (210) to touch the change-over switch; the operating mechanism (210) linkage connects to the upper grilling unit (100) of the grill.

8. A temperature auto-compensation grill according to the claim 7, wherein the operation mechanism (210) includes a linkage sliding connecting to the upper grilling unit (100), the first end of the linkage touch the change-over switch; the upper grilling unit (100) is disposed with withstand portion which can withstand the second end of the linkage to push the linkage sliding when the upper grilling unit (100) rotates from the first position to the second position.

9. A temperature auto-compensation grill according to the claim 6, claim 7 or claim 8, wherein the first steady temperature is lower than the second steady temperature.

## Patentansprüche

1. Grill mit automatischem Temperaturausgleich, der eine obere Grilleinheit (100), eine untere Grilleinheit (200) und eine Heizungsschaltung (300) umfasst; wobei das Drehen der oberen Grilleinheit (100) mit der unteren Grilleinheit (200) verbindet und sie sich zwischen einer ersten Position und einer zweiten Position dreht; wobei der Grill in dem ersten Zustand ist, wenn die obere Grilleinheit (100) in der ersten Position angeordnet ist; der Grill in dem zweiten Zustand ist, wenn die obere Grilleinheit (100) in der zweiten Position angeordnet ist; wobei die Heizungsschaltung (300) umfasst:
eine Heizung (310), von der ein Ende an einer Elektrode des Netzstroms angebracht ist;
einen ersten Thermostat (320), von dem ein Ende an dem anderen Ende der Heizung (310) angebracht ist; **gekennzeichnet durch**
einen zweiten Thermostat (330), von dem ein Ende an dem anderen Ende der Heizung (310) angebracht ist; und
einen Umschalter (340), der in dem ersten Zustand mit der anderen Elektrode des Netzstroms und dem ersten Thermostat (320) verbindet, wobei der Umschalter (340) in dem zweiten Zustand mit der anderen Elektrode des Netzstroms und dem zweiten Thermostat (330) verbindet.

2. Grill mit automatischem Temperaturausgleich nach Anspruch 1, wobei der Grill mit automatischem Temperaturausgleich ferner einen Betriebsmechanismus (210) umfasst, um den Umschalter (340) zu berühren; wobei die Betriebsmechanismuskopplung mit der oberen Grilleinheit des Grills verbindet.

3. Grill mit automatischem Temperaturausgleich nach Anspruch 2, wobei der Umschalter (340) ein elektrischer Druckschalter ist, der einen Druckschalter umfasst; der Betriebsmechanismus (210) einen Drehteller (211), der sich synchron mit der oberen Grilleinheit (100) dreht, und ein Betriebspendel, das an dem Drehteller (211) befestigt ist, um den Druckschalter zu berühren, umfasst.

4. Grill mit automatischem Temperaturausgleich nach Anspruch 1, wobei die konstante Temperatur des ersten Thermostats (320) niedriger als die konstante Temperatur des zweiten Thermostats (330) ist.

5. Grill mit automatischem Temperaturausgleich nach Anspruch 1, Anspruch 2 oder Anspruch 3, wobei die Heizungsschaltung (300) und der Schalter im Inneren der unteren Grilleinheit (200) angeordnet sind.

6. Grill mit automatischem Temperaturausgleich, der eine obere Grilleinheit (100), eine untere Grilleinheit (200) und eine Heizungsschaltung (300) umfasst; wobei das Drehen der oberen Grilleinheit (100) mit der unteren Grilleinheit (200) verbindet und sie sich zwischen einer ersten Position und einer zweiten Position dreht; wobei der Grill in dem ersten Zustand ist, wenn die obere Grilleinheit (100) in der ersten Position angeordnet ist; der Grill in dem zweiten Zustand ist, wenn die obere Grilleinheit (100) in der zweiten Position angeordnet ist; wobei die Heizungsschaltung (300) umfasst:
eine Heizung (450), von der ein Ende an einer Elektrode des Netzstroms angebracht ist;
einen Thermostat (460) zum Regulieren der konstanten Temperatur, der mit dem anderen Ende der Heizung (450) und der anderen Elektrode des Netzstroms verbbindet; **dadurch gekennzeichnet, dass** der Thermostat (460) einen Umschalter umfasst, um die konstante Temperatur des Thermostats (460) festzulegen, wobei der Thermostat (460) in dem ersten Zustand die erste konstante Temperatur hat und der Thermostat (460) in dem zweiten Zustand die zweite konstante Temperatur hat.

7. Grill mit automatischem Temperaturausgleich nach Anspruch 6, wobei der Grill mit automatischem Temperaturausgleich ferner einen Betriebsmechanismus (210) umfasst, um den Umschalter zu berühren; wobei die Kopplung des Betriebsmechanismus (210) mit der oberen Grilleinheit (100) des Grills verbindet.

8. Grill mit automatischem Temperaturausgleich nach Anspruch 7, wobei der Betriebsmechanismus (210) ein Schiebekopplung umfasst, die mit der oberen Grilleinheit (100) verbindet, wobei das erste Ende der Kopplung den Umschalter berührt; wobei die obere Grilleinheit (100) mit einem Widerstandselement versehen ist, das dem zweiten Ende der Kopplung Widerstand leisten kann, um die Gleitkopplung zu drücken, wenn die obere Grilleinheit (100) sich von der ersten Position zu der zweiten Position dreht.

9. Grill mit automatischem Temperaturausgleich nach Anspruch 6, Anspruch 7 oder Anspruch 8, wobei die erste konstante Temperatur niedriger als die zweite konstante Temperatur ist.

## Revendications

1. Grill à auto-compensation de la température, qui comprend une unité de grill supérieure (100), une unité de grill inférieure (200) et un circuit de chauffage (300) ; l'unité de grill supérieure (100) étant reliée de manière pivotante à l'unité de grill inférieure (200) et pivotant entre une première position et une seconde position ; le grill étant dans le premier état quand l'unité de grill supérieure (100) se trouve dans la première position ; le grill étant dans le second état quand l'unité de grill supérieure (100) se trouve dans la seconde position ; étant précisé que le circuit de chauffage (300) comprend :
un dispositif de chauffage (310), dont une extrémité est fixée à une électrode de l'alimentation ;
un premier thermostat (320), dont une extrémité est fixée à l'autre extrémité du dispositif de chauffage (310) ; **caractérisé par**
un second thermostat (330), dont une extrémité est fixée à l'autre extrémité du dispositif de chauffage (310) ; et
un commutateur d'inversion (340), qui est relié à l'autre électrode de l'alimentation et au premier thermostat (320) dans le premier état, le commutateur d'inversion (340) étant relié à l'autre électrode de l'alimentation et au second thermostat (330) dans le second état.

2. Grill à auto-compensation de la température selon la revendication 1, le grill à auto-compensation de la température comprenant également un mécanisme d'actionnement (210) pour toucher le commutateur d'inversion (340) ; le couplage de mécanisme d'actionnement étant relié à l'unité supérieure du grill.

3. Grill à auto-compensation de la température selon la revendication 2, dans lequel le commutateur d'inversion (340) est un commutateur électrique à poussoir qui comprend un commutateur à poussoir ; le mécanisme d'actionnement (210) comprend une calotte de rotation (211) qui tourne de manière synchrone avec l'unité de grill supérieure (100) et un pendule d'actionnement fixé à ladite calotte de rotation (211) pour toucher le commutateur à poussoir.

4. Grill à auto-compensation de la température selon la revendication 1, dans lequel la température stable du premier thermostat (320) est inférieure à la température stable du second thermostat (330).

5. Grill à auto-compensation de la température selon la revendication 1, la revendication 2 ou la revendication 3, dans lequel le circuit de chauffage (300) et le commutateur sont disposés à l'intérieur de l'unité de grill inférieure (200).

6. Grill à auto-compensation de la température, qui comprend une unité de grill supérieure (100), une unité de grill inférieure (200) et un circuit de chauffage (300), l'unité de grill supérieure (100) étant reliée de manière pivotante à l'unité de grill inférieure (200) et pivotant entre une première position et une seconde position ; le grill étant dans le premier état quand l'unité de grill supérieure (100) se trouve dans la première position ; le grill étant dans le second état quand l'unité de grill supérieure (100) se trouve dans la seconde position ; étant précisé que le circuit de chauffage (300) comprend :
un dispositif de chauffage (450), dont une extrémité est fixée à une électrode de l'alimentation ;
un thermostat (460), pour réguler la température stable, qui est relié à l'autre extrémité du dispositif de chauffage (450) et à l'autre électrode de l'alimentation, **caractérisé en ce que** le thermostat (460) comprend un commutateur d'inversion pour fixer la température stable du thermostat (460), le thermostat (460) présente la première température stable dans le premier état, et le thermostat (460) présente la seconde température stable dans le second état.

7. Grill à auto-compensation de la température selon la revendication 6, le grill à auto-compensation de la température comprenant également un mécanisme d'actionnement (210) pour toucher le commutateur d'inversion ; le couplage de mécanisme d'actionnement (210) étant relié à l'unité supérieure (100) du grill.

8. Grill à auto-compensation de la température selon la revendication 7, dans lequel le mécanisme d'actionnement (210) comprend une glissière de couplage, qui est reliée à l'unité de grill supérieure (100), la première extrémité du couplage touche le commutateur d'inversion ; l'unité de grill supérieure (100) est pourvue d'une partie de résistance qui peut résister à la seconde extrémité du couplage pour pousser la glissière de couplage quand l'unité de grill supérieure (100) pivote et passe de la première position à la seconde position.

9. Grill à auto-compensation de la température selon la revendication 6, la revendication 7 ou la revendication 8, dans lequel la première température stable est inférieure à la seconde température stable.
